# EUROPEAN PATENT SPECIFICATION

(11) **EP 3 236 878 B1**
(45) Date of publication and mention of the grant of the patent: **09.12.2020**
(21) Application number: 15872107.6
(22) Date of filing: 24.12.2015
(51) Int. Cl.: A61C 8/00, A61C 19/04

(54) **A DENTAL MEASURING ABUTMENT AND ASSEMBLY**
MESSABUTMENT FÜR DIE ZAHNMEDIZIN UND ANORDNUNG
OUTIL ET BUTÉE DE MESURE DENTAIRE

(30) Priority: 25.12.2014 US 201462096868 P
(43) Date of publication of application: 01.11.2017
(73) Proprietor: T.A.G. Medical Devices - Agriculture Cooperative Ltd., 2513000 Doar-Na Oshrat (IL)
(72) Inventor: BARUC, Daniel, 2244129 Nahariya (IL)
(74) Representative: Patentanwälte Bals & Vogel
(86) International application number: PCT/IL2015/051254
(87) International publication number: WO 2016/103270

(56) References cited:
- WO-A1-2006/006923
- WO-A1-2007/136200
- WO-A1-2013/117608
- WO-A1-2014/009955
- JP-A- H08 252 269
- US-A1- 2008 206 709
- US-A1- 2013 189 646
- US-B1- 8 814 565
- US-B2- 8 033 826
- US-B2- 8 651 865

## Description

### FIELD AND BACKGROUND OF THE INVENTION

The present invention, in some embodiments thereof, relates to measuring parameters of a dental abutment, and more particularly, but not exclusively, to a dental measuring assembly configured for measuring a height and/or angle of a dental abutment.

US Publication number US 8651865 B2 discloses "A set of one-piece angled abutments, each abutment including an angled stump, a short intermediate cylindrical portion, and a lower threaded portion, wherein the placement of the starting point of the thread within the first round in the lower threaded portion of each abutment determines the angular orientation from 0° to 360° attained by the stump once the abutment is fully tightened to an implant located in the patient's mandible, the set has a variable number of abutments depending on the value of the constant angular offset chosen for spacing the beginning of the thread of each abutment included in the set, each set being defined by a constant angular offset with a value which is a divisor of 360 and the sets of abutments being accompanied by a circular box to easily select the abutment that attains the ideal angular orientation for a patient's needs."

US 2013/189646 discloses "A dental implant has a hollow shell...for engaging a soft tissue socket left in gingival tissue after a tooth has been extracted, to promote healing. The shell tapers outwardly from a first to a second perimeter, the second perimeter being asymmetrically scalloped with opposite distal and mesial peaks and opposite lingual and facial valleys between the peaks." (abstract).

The present invention, in some embodiments thereof, relates to dental implants. More specifically, the present invention, in some embodiments thereof, relates to a dental measuring abutment.

### SUMMARY OF THE INVENTION

The invention is defined by a dental measuring assembly kit according to claim 1 and a method for employing said kit according to claim 3. Preferred embodiment are defined in the dependent claims. According to an aspect of some embodiments there is provided a dental measuring assembly comprising: an elongated stem defining a longitudinal axis between a proximal end and a distal end of the stem; a measuring abutment configured to be received over the proximal end of the stem and to axially slide over the stem; wherein a distal segment of the stem comprises scale markings denoting a height of a distal end of the measuring abutment relative to the stem. According to the invention, the abutment is configured to closely-fit the stem such that wobbling of a long axis of the abutment relative to the longitudinal axis of the stem is smaller than 2. In some embodiments, the distal segment of the shaft comprising the scale is formed with at least one of protrusions and indentations. In some embodiments, the stem is at least 10 mm long. In some embodiments, the stem is no more than 30 mm long. In some embodiments, the abutment comprises a distal annular portion defining a longitudinal bore in which the stem is received, the bore comprising a cross section profile corresponding with a cross section profile of the stem. In some embodiments, the cross section profiles are circular and a diameter of the longitudinal bore of the abutment is no more than 2% larger than a diameter of the stem. In some embodiments, a proximally extending portion of the measuring abutment comprises at least one inclined surface, the surface disposed at an angle relative to the longitudinal axis of the stem when the abutment is positioned over the stem. In some embodiments, the stem comprises a radially-outward extending shoulder configured on a distal end of the distal segment, the shoulder sized to limit sliding of the measuring abutment in a distal direction. In some embodiments, the abutment is held to the stem by a friction-fit coupling. In some embodiments, the friction is between two materials, and at least one of an outer surface of the stem and an inner surface of the abutment at the bore comprises a material having a high friction coefficient. In some embodiments, the outer surface of the stem comprises titanium and the inner surface of the abutment comprises rubber. In some embodiments, the distal annular portion of the abutment comprises a groove, and an elastic element is seated within the groove to tighten a fit of the abutment onto the stem.

In some embodiments, the distal annular portion of the abutment comprises a groove extending from an outer surface of the portion to an inner surface of the portion.

In some embodiments, a portion of the stem configured distally to the segment comprising the scale is configured to engage a dental implant. In some embodiments, the stem is attached to the dental implant by an interference-fit coupling. In some embodiments, the stem comprises distal extensions configured to press-fit into a cavity configured at a proximal portion of the implant, the distal extensions configured to spring radially outwardly to resist pull-out of the stem from the implant. In some embodiments, the distal extensions are shaped to resist rotation of the stem around an axis of the implant when the stem is attached to the implant. In some embodiments, a coupling between the implant and stem is configured to resist pull out force. In some embodiments, the inclined surface of the abutment is disposed at an angle between 0-90 degrees relative to the longitudinal axis of the stem. In some embodiments, the scale marks on the stem are denoted at non-equal intervals.

According to an aspect of some embodiments there is provided a dental measuring assembly kit comprising: an elongated stem defining a longitudinal axis between a proximal end and a distal end of the stem; a plurality of measuring abutments, each measuring abutment configured to be received over the proximal end of the stem and to axially slide over the stem; wherein a distal segment of the stem comprises scale markings denoting a height of a distal end of the measuring abutment relative to the stem; and wherein each measuring abutment comprises an inclined surface disposed at a different angle relative to the longitudinal axis of the stem. In some embodiments, the kit comprises at least three abutments: a first abutment defining an angle of 0 degrees relative to the longitudinal axis of the stem; a second abutment defining an angle of 15 degrees relative to the longitudinal axis of the stem; and a third abutment defining an angle of 25 degrees relative to the longitudinal axis of the stem.

According to an aspect of some embodiments there is provided a method of determining at least one of a height and angle of a dental abutment, comprising: positioning an elongated stem over a dental implant implanted in a jawbone of a patient; threading a measuring abutment over the stem; sliding the abutment axially on the stem to determine a height for a fixed abutment, the height being determined according to scale marks denoted on the stem; assessing whether an angle defined by the measuring abutment relative to the stem at the current layout is configured to fulfill functional requirements of a fixed abutment selected according to the current angle. In some embodiments, the method further comprises, following the assessing, replacing the measuring abutment with another measuring abutment defining a different angle relative to the longitudinal axis of the stem and repeating the assessing. In some embodiments, positioning the stem over the dental implant comprises press-fitting the stem into the implant. In some embodiments, positioning the measuring abutment over the stem comprises threading an annular portion of the abutment over a proximal end of the stem.

According to an aspect of some embodiments there is provided a stem for a measuring abutment for a dental implant, comprising: an elongated cylindrical shaft, the shaft being at least 10 mm long, the shaft comprising a distal portion configured to engage an implant in a jawbone, an intermediate portion sized to allow for a measuring abutment to move over it when placed on the stem; and a proximal portion. In some embodiments, the distal portion comprises one or more extensions configured to interference-fit within a head of the implant. In some embodiments, the intermediate portion comprises scale marks denoting a height of the abutment when placed over the stem. In some embodiments, the stem comprises a radially outward extending shoulder configured between the intermediate portion and the distal portion for limiting movement of the abutment on the stem in a distal direction when the abutment is positioned over the stem.

There is thus provided, in accordance with some embodiments of the present invention, a measuring abutment assembly for use with a dental implant, comprising an abutment stem arranged along a longitudinal axis, and a measuring abutment arranged at an angle with respect to the longitudinal axis. In some embodiments, the measuring abutment is slidably movable relative to the abutment stem.

In some embodiments, the measuring abutment is configured for friction-fit engagement with the abutment stem. In some embodiments, the measuring abutment assembly is in a friction-fit engagement with the dental implant.

In accordance with some embodiments of the present invention, the friction-fit engagement between the measuring abutment assembly and the dental implant is tighter than the friction-fit engagement between the measuring abutment and the abutment stem.

In accordance with some embodiments of the present invention, the measuring abutment includes a surface disposed at an angle with respect to the longitudinal axis. Optionally, the surface is disposed at an angle with respect to the longitudinal axis of the abutment stem. In some embodiments, the measuring abutment is arranged at an angle of 0° with respect to the longitudinal axis.

Alternatively, the surface is disposed at an angle of 15° with respect to the longitudinal axis.

Yet alternatively, the surface is disposed at an angle of 25° with respect to the longitudinal axis.

Alternatively, the surface is disposed at angle between 0-90 degrees, such as 20 degrees, 50 degrees, 70 degrees or intermediate, larger or smaller angles.

In accordance with some embodiments of the present invention the measuring abutment includes a plurality of surfaces disposed at different angles with respect to the longitudinal axis.

According to some embodiments of the invention, there is provided a measuring abutment assembly for use with a dental implant, comprising: an abutment stem arranged along a longitudinal axis; a measuring abutment arranged at an angle with respect to the longitudinal axis and wherein the measuring abutment is slidably movable relative the abutment stem. In some embodiments, the measuring abutment is in a friction-fit engagement with the abutment stem. In some embodiments, the measuring abutment assembly is in a friction-fit engagement with the dental implant. In some embodiments, the friction-fit engagement between the measuring abutment assembly and the dental implant is tighter than the friction-fit engagement between measuring abutment and abutment stem. In some embodiments, the measuring abutment includes a surface disposed at an angle with respect to the longitudinal axis. In some embodiments, the measuring abutment is arranged at an angle of 0° with respect to the longitudinal axis. Alternatively, the surface is disposed at an angle of 15° with respect to the longitudinal axis. Alternatively, the surface is disposed at an angle of 25° with respect to the longitudinal axis. In some embodiments, the measuring abutment includes a plurality of surfaces disposed at different angles with respect to the longitudinal axis.

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

### BRIEF DESCRIPTION OF THE SEVERAL VIEWS OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:
The present invention will be understood and appreciated more fully from the following detailed description, taken in conjunction with the drawings in which like components are denoted by like reference numerals:
FIG. 1A is a simplified isometric view of a first angle measuring abutment, constructed and operative in accordance with some embodiments of the present invention;
FIG. 1B is a simplified isometric view of a second angle measuring abutment, constructed and operative in accordance with some embodiments of the present invention;
FIG. 1C is a simplified isometric view of a third angle measuring abutment, constructed and operative in accordance with some embodiments of the present invention;
FIG. ID is a flowchart of a method of selecting a fixed abutment using a measuring assembly, in accordance with some embodiments of the present invention;
FIG. 1E is an illustration of a measuring assembly comprising a measuring abutment and an abutment stem mounted onto a dental implant in a jaw bone, according to some embodiments of the invention;
FIG. 2 is a simplified isometric view of an abutment stem, constructed and operative in accordance with some embodiments of the present invention;
FIG. 3A is a simplified exploded view of a measuring assembly, including the abutment stem of Fig. 2 and the measuring abutment of Fig. 1C, in accordance with some embodiments of the present invention;
FIG. 3B is a simplified assembled view of a measuring assembly of Fig. 3A, in accordance with some embodiments of the present invention;
FIG. 3C is a simplified cross-sectional view of a measuring assembly of Fig. 3B, section being taken along lines A - A in Fig. 3B, in accordance with some embodiments of the present invention;
FIG. 4A is a simplified assembled view of a measuring assembly of Fig. 3B assembled on an implant, in accordance with some embodiments of the present invention;
FIG. 4B is a simplified cross-sectional view of a measuring assembly assembled on an implant of Fig. 4A, section being taken along lines B - B in Fig. 4A, in accordance with some embodiments of the present invention;
FIG. 5A is a simplified exploded view of a measuring assembly, including the abutment stem of Fig. 2 and the measuring abutment of Fig. 1A, in accordance with some embodiments of the present invention;
FIG. 5B is a simplified assembled view of a measuring assembly of Fig. 5A, in accordance with some embodiments of the present invention;
FIG. 5C is a simplified cross-sectional view of a measuring abutment of Fig. 5B, section being taken along lines C - C in Fig. 5B;
FIG. 6A is a simplified assembled view of a measuring assembly of Fig. 5B assembled on an implant, in accordance with some embodiments of the present invention;
FIG. 6B is a simplified cross-sectional view of a measuring assembly assembled on an implant of Fig. 6A, section being taken along lines D - D in Fig. 6A, in accordance with some embodiments of the present invention;
FIG. 7A is a simplified exploded view of a measuring assembly, including the abutment stem of Fig. 2 and the measuring abutment of Fig. 1B, in accordance with some embodiments of the present invention;
FIG. 7B is a simplified assembled view of a measuring assembly of Fig. 7A, in accordance with some embodiments of the present invention;
FIG. 7C is a simplified cross-sectional view of a measuring assembly of Fig. 7B, section being taken along lines E - E in Fig. 7B, in accordance with some embodiments of the present invention;
FIG. 8A is a simplified assembled view of a measuring assembly of Fig. 7B assembled on an implant, in accordance with some embodiments of the present invention;
FIG. 8B is a simplified cross-sectional view of a measuring assembly assembled on an implant of Fig. 8A, section being taken along lines F - F in Fig. 8A, in accordance 5 with some embodiments of the present invention;
FIG. 9 is a simplified illustration of a jaw bone with an implant and a measuring assembly assembled thereon, in accordance with some embodiments of the present invention;
FIG. 10 is an illustration of a measuring assembly comprising a measuring abutment and an abutment stem mounted onto a dental implant in a jaw bone, the assembly comprising an elastic element positioned at an interface between the stem and the abutment, according to some embodiments of the invention;
FIG. 11A is a simplified isometric view of a first angle measuring abutment for use with an elastic element, constructed and operative in accordance with some embodiments of the present invention;
FIG. 11B is a simplified isometric view of a second angle measuring abutment for use with an elastic element, constructed and operative in accordance with some embodiments of the present invention;
FIG. 11C is a simplified isometric view of a third angle measuring abutment for use with an elastic element, constructed and operative in accordance with some embodiments of the present invention;
FIG. 12 is a simplified isometric view of an abutment stem for use with an elastic element, constructed and operative in accordance with some embodiments of the present invention;
FIG. 13A is a simplified exploded view of a measuring assembly, including the abutment stem of Fig. 12 and the measuring abutment of Fig. 11C, in accordance with some embodiments of the present invention;
FIG. 13B is a simplified assembled view of a measuring assembly of Fig. 13A, in accordance with some embodiments of the present invention;
FIG. 13C is a simplified cross-sectional view of a measuring assembly of Fig. 13B, section being taken along lines A - A in Fig. 13B, in accordance with some embodiments of the present invention;
FIG. 14A is a simplified assembled view of a measuring assembly of Fig. 13B assembled on an implant, in accordance with some embodiments of the present invention;
FIG. 14B is a simplified cross-sectional view of a measuring assembly assembled on an implant of Fig. 14A, section being taken along lines B - B in Fig. 14A, in accordance with some embodiments of the present invention;
FIG. 14C is a simplified cross-sectional view of a measuring assembly assembled on an implant of Fig. 14A, cross section being transverse to the cross section shown in figure 14B;
FIG. 15A is a simplified exploded view of a measuring assembly, including the abutment stem of Fig. 12 and the measuring abutment of Fig. 11A, in accordance with some embodiments of the present invention;
FIG. 15B is a simplified assembled view of a measuring assembly of Fig. 15A, in accordance with some embodiments of the present invention;
FIG. 15C is a simplified cross-sectional view of a measuring abutment of Fig. 15B, section being taken along lines C - C in Fig. 15B;
FIG. 16A is a simplified assembled view of a measuring assembly of Fig. 15B assembled on an implant, in accordance with some embodiments of the present invention;
FIG. 16B is a simplified cross-sectional view of a measuring assembly assembled on an implant of Fig. 16A, section being taken along lines D - D in Fig. 16A, in accordance with some embodiments of the present invention;
FIG. 16C is a simplified cross-sectional view of a measuring assembly assembled on an implant of Fig. 16A, cross section being transverse to the cross section shown in figure 16B;
FIG. 17A is a simplified exploded view of a measuring assembly, including the abutment stem of Fig. 12 and the measuring abutment of Fig. 11B, in accordance with some embodiments of the present invention;
FIG. 17B is a simplified assembled view of a measuring assembly of Fig. 17A, in accordance with some embodiments of the present invention;
FIG. 17C is a simplified cross-sectional view of a measuring assembly of Fig. 17B, section being taken along lines E - E in Fig. 17B, in accordance with some embodiments of the present invention;
FIG. 18A is a simplified assembled view of a measuring assembly of Fig. 17B assembled on an implant, in accordance with some embodiments of the present invention;
FIG. 18B is a simplified cross-sectional view of a measuring assembly assembled on an implant of Fig. 18A, section being taken along lines F - F in Fig. 18A, in accordance with some embodiments of the present invention; and
FIG. 18C is a simplified cross-sectional view of a measuring assembly assembled on an implant of Fig. 18A, cross section being transverse to the cross section shown in figure 18B.

### DESCRIPTION OF SPECIFIC EMBODIMENTS OF THE INVENTION

The present invention, in some embodiments thereof, relates to measuring parameters of a dental abutment, and more particularly, but not exclusively, to a dental measuring assembly configured for measuring a height and/or determining an angle of a dental abutment.

An aspect of some embodiments relates to determining parameters of a dental abutment that is to be implanted in a patient's mouth. In some embodiments, the parameters comprise a height of the abutment, determined for example according to a thickness of the gingiva. In some embodiments, the parameters comprise an angle of the abutment, determined for example according to an inclination of adjacent teeth and/or according to a dental occlusion anatomy of the patient. In some embodiments, parameters of the abutment are determined such that a dental prosthesis (e.g. crown or bridge) that is placed over the abutment will match a contour of the teeth. In some cases, the dental implant is positioned at an offset angle relative to a desired angle of the dental prosthesis (i.e. an angle that will aesthetically match the contour of the teeth), and the abutment is selected to compensate for the angle difference.

An aspect of some embodiments relates to a dental measuring assembly configured for determining a height and/or angle for a fixed abutment. In some embodiments, the dental measuring assembly comprises an elongated stem and an abutment configured to be positioned (e.g. threaded) over the stem. In some embodiments, a plurality of abutments are provided, each defining a different angle relative to the stem. Optionally, the abutments are positioned over the stem one at a time until an abutment that defines a best-fitting angle is selected. In some embodiments, the angle is defined between at least one inclined surface of the abutment, and the longitudinal axis of the stem. Optionally, the angle is determined so that the abutment, at the selected layout, will be positioned so that a crown, bridge or other prosthesis positioned on the abutment will fulfill one or more functional requirements such as matching a contour of the teeth, providing for jaw closure, and/or other requirements.

In some embodiments, the stem is configured to engage a dental implant. Optionally, the stem is positioned over the implant such that a longitudinal axis of the stem is directly aligned with a longitudinal axis of the implant, so that an angle measured between the abutment and stem is equivalent to an angle between the abutment and the implant.

An aspect of some embodiments relates to a dental measuring assembly in which the abutment is slidable over the stem. In some embodiments, the abutment is movable in a proximal and/or distal directions along the stem. In some embodiments, the stem comprises scale marks denoting a current height of the abutment, for example a current height of a distal end of the abutment relative to, for example, the gingival margin and/or the gingival-jawbone margin, when the stem is placed over an implanted dental implant.

In some embodiments, the measuring abutment snugly-fits the stem. Optionally, the abutment closely-fits the stem such that wobbling of the abutment relative to the stem is reduced or prevented. In some embodiments, wobbling of the abutment relative to the stem, for example between the long axis of the abutment and the long axis of the stem, is less than 0.5°, less than 1°, less than 2°, or intermediate, or smaller angles.

In some embodiments, the abutment comprises an annular portion, defining a bore shaped and sized to receive the stem. In some embodiments, the annular portion is configured to be held onto the stem by a friction-fit coupling. In some embodiments, the annular portion of the abutment and the stem segment on which the abutment is movable comprise corresponding cross section profiles, for example both profiles are circular, or in another example the annular portion comprises an inner hexagonal profile and the stem comprises a circular profile. In some embodiments, in the example of corresponding circular cross section profiles, a tolerance of an inner diameter of the annular portion of the abutment and an outer diameter of the stem is selected to be restrictive enough so as to maintain the abutment held onto the stem, yet permissive enough to provide for relative sliding of the abutment on the stem. Additionally or alternatively, materials of at least the inner surface of the abutment and an outer surface of the stem are selected with a friction coefficient high enough to hold the abutment on the stem. In an example, the stem comprises titanium and the inner surface of the abutment comprises rubber. Additionally or alternatively, a fastening element such as an elastic element, for example a rubber band, is positioned at an interface between the abutment and stem, to tighten the coupling between them. In some embodiments, the elastic element is configured to compress the abutment over the stem. Optionally, the elastic element is seated in a groove formed in the annular portion of the abutment. Optionally, the groove comprises one or more openings through which the stem is exposed, allowing for direct contact between the elastic element, when seated in the groove, and the stem.

In some embodiments, the annular portion of the abutment is shaped to restrict movement other than axial movement of the abutment along the length of the stem. Optionally, to facilitate threading and/or sliding of the abutment over the stem, a groove is formed between the inner and outer surfaces of the annular portion.

In some embodiments, the stem comprises one more protrusions for limiting movement of the annular portion of the abutment over the stem. In an example, a distal portion of the stem comprises a radially outward extending shoulder limiting movement of the abutment in the distal direction. In another example, the scale on the stem is formed with protrusions and/or indentations. Optionally, the protrusions and/or indentations are sized to temporarily stop the abutment from sliding on the stem. Optionally, the groove formed in the annular portion of the abutment facilitates pushing the abutment over the protrusions and/or indentations of the scale, for example when measuring the height.

In some embodiments, a plurality of stems are provided, wherein in each stem the radially outward extending shoulder defines a different "zero height" level relative to the other stems. Optionally, the stem is selected according to its "zero height" level. Additionally or alternatively, a spacer (for example in the form of a ring) is placed over the stem to re-define the height reference level. Additionally or alternatively, as the angle depends on the height reference level, different height-angle combinations are tested. An aspect of some embodiments relates to a stem configured to engage a dental implant by an interference fit coupling. In some embodiments, a coupling between the stem and the implant is configured to resist, at least to some extent, pull-out of the stem from the implant. In some embodiments, the coupling is configured to resist rotation of the stem around the axis of the implant. Alternatively, the coupling permits rotation of the stem around the axis of the implant.

In some embodiments, a distal portion of the abutment comprises one or more extensions, for example distally extending fingers, configured to be received within a cavity of the implant to produce the interference-fit. Optionally, the extensions are configured to spring-outwardly with respect to the stem and to snap-fit into the implant cavity. Optionally, at least a portion of the extensions such as a distal portion is shaped to be received within respective recesses formed in the implant cavity, such as to prevent rotation of the stem relative to the long axis of the implant. In some embodiments, the extensions are pushed inwardly to allow removal of the stem from the implant.

According to an embodiment of the present invention, a measuring abutment is provided configured for measuring both angle and height of required prosthesis.

A dental prosthesis such as a crown, a bridge or any other dental prosthesis is to be fixedly fitted on a dental abutment that is manufactured using the measuring abutment that is described in detail hereinbelow.

In some embodiments, the stem comprises a longitudinal axis extending between a proximal end of the stem and a distal end of the stem;

In some embodiments, the abutment comprises a longitudinal axis passing through a respective center of the bore defined by the annular portion, and extending between the proximal end of the abutment and the distal end of the abutment;

In some embodiments, the implant comprises a longitudinal axis, extending between a proximal end of the implant and a distal end of the implant.

In some embodiments, two or more of the above mentioned axis are aligned with respect to each other, for example when the stem is placed over the implant such that its longitudinal axis is aligned directly above the implant axis.

A "fixed abutment", as referred to herein, may include an abutment other than the measuring abutment that is to be placed in the patient's mouth. It is noted that the term "fixed", as referred to herein, is used to distinguish between the measuring abutment, which is placed in the mouth for a short period of time (e.g. minutes), and an abutment that is to remain in the patient's mouth for a longer period of time. A "fixed abutment" may include a temporary abutment as well. The fixed abutment may include a custom made abutment, a prefabricated abutment, and/or any other type of connector between a dental implant and a prosthesis such as a crown or a bridge. In some embodiments, the fixed abutment is configured to engage a dental implant. Optionally, a coupling between the fixed abutment and the dental implant is strong enough to resist forces acting on the dental prosthesis that is positioned over the abutment, such as forces acting on the prosthesis during jaw movement (e.g. during chewing).

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

Before explaining at least one embodiment of the invention in detail, it is to be understood that the invention is not necessarily limited in its application to the details set forth in the following description or exemplified by the Examples. The invention is capable of other embodiments or of being practiced or carried out in various ways.

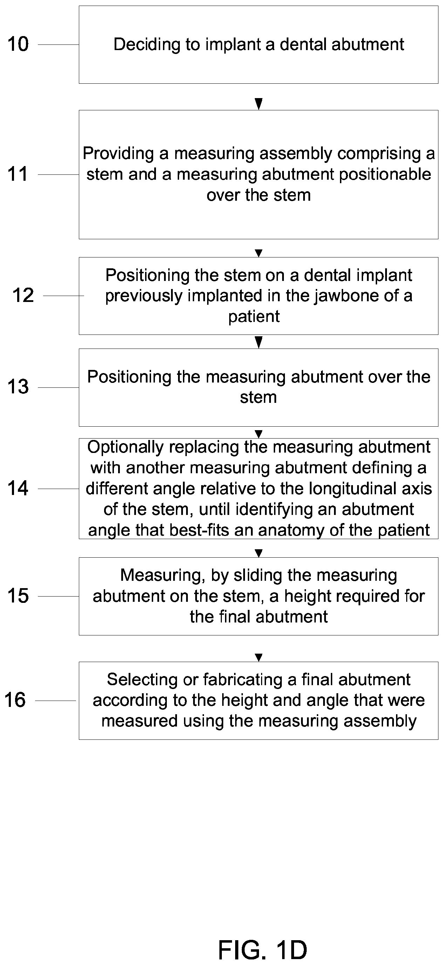

Referring to the figures, **figure 1D** is a flowchart of a method for selecting a fixed abutment using a measuring assembly, according to some embodiments of the invention.

In some embodiments, a decision is made (for example by a dentist or other clinical personnel) to implant an abutment (10). Optionally, the abutment is to be attached over an implant placed in the patient's jawbone, to support a crown, bridge and/or other dental prosthesis fixed onto the abutment. In some cases, it is desirable that the fixed abutment will provide for positioning a dental prosthesis such as a crown or bridge that will match the contour of the teeth.

In some cases, an angle for the fixed abutment is assessed. Optionally, the measured angle is an angle of an inclined surface of the abutment (for example as further discussed below) with respect to a longitudinal axis of the implant. In some embodiments, a height for the fixed abutment is assessed. Optionally, the height comprises a gingival thickness. In some embodiments, a width (e.g. diameter) of the abutment is assessed. In some embodiments, a length of the abutment and/or any other dimensions are assessed for selecting and/or fabricating a fixed abutment.

In some embodiments, a measuring assembly comprising a stem and an abutment positionable over the stem is provided for determining one or more of the abutment parameters referred to herein (11). Optionally, the abutment comprises at least one inclined surface, which, when the abutment is positioned over the stem, is disposed at an angle relative to a longitudinal axis of the stem. Optionally, the angle is between, for example, 0-25 degrees, 10-50 degrees, 35- 85 degrees, such as 5 degrees, 15 degrees, 20 degrees, 30 degrees, 65 degrees, 70 degrees or intermediate, larger or smaller angles.

In some embodiments, the measuring assembly is positioned on a dental implant previously implanted in the jawbone of the patient (12). In some embodiments, the stem is configured to be attached to the implant. Optionally, at least a distal portion of the stem is shaped to engage the implant, for example by an interference-fit. In an example, the stem comprises distally extending resilient fingers that are received within a proximal receiving cavity of the implant, for example as further discussed herein. In some embodiments, the stem is compressively fitted over the implant. Optionally, a tight fit between the stem and the implant is obtained by selection of materials which increase the friction and/or reduce resiliency between the stem and the implant, for example both the stem and the implant comprise titanium and/or any other metal-metal interface. Additionally or alternatively, a tight fit between the stem and the implant is obtained by a defining a restrictive tolerance between the components.

In some embodiments, the abutment is placed over the stem (13), for example threaded over the stem. In some embodiments, at least a portion of the abutment which is threaded around the stem is shaped and/or sized to closely fit the stem. Optionally, the abutment substantially does not sway sideways relative to the stem.

In some embodiments, the abutment is held to the stem by a friction-fit coupling. Optionally, friction forces between the abutment and stem are high enough to prevent the abutment from easily sliding off of the stem, yet low enough to allow for sliding the abutment over at least a longitudinal segment of the stem. In some embodiments, the friction fit coupling between the stem and the abutment is obtained by selection of materials which increase the friction between the stem and the abutment, for example the stem comprises the titanium and at least an inner surface of the abutment, for example at the annular portion of the abutment which surrounds the stem, comprises rubber. Additionally or alternatively, a friction fit between the stem and the abutment is obtained by defining restrictive tolerance between the components. Additionally or alternatively, one or more structural elements of the stem and/or of the abutment are configured for interference fit. Additionally or alternatively, the abutment is held onto the stem with the aid of an elastic element and/or any other restricting element positioned at an interface between the abutment and stem.

In some embodiments, a structure of the abutment is designed to provide for relative sliding of the abutment over the stem, for example when determining a height for the fixed abutment. In some embodiments, the abutment is formed with one or more resilience-increasing elements, such as a groove extending from an outer surface of the abutment to an inner surface of the abutment. Optionally, the groove widens when the abutment is placed and/or moved on the stem, allowing for slight movement of opposing abutment portions relative to each other.

In some embodiments, a coupling between the stem and the implant is configured to withstand disengaging forces (such as axial pull-out force, torque and/or other forces applied to the stem). Optionally, the stem-implant coupling is stronger than the stem-abutment coupling. Such configuration may provide for moving the abutment over the stem (e.g. sliding) while movement of the stem relative to the implant is reduced or prevented. In some embodiments, a tighter fit between the implant and the stem is obtained by a smaller tolerance between these components, as compared to tolerances defined between the stem and the abutment. Additionally or alternatively, a tighter fit is obtained by selecting materials of higher friction at the stem-implant interface than at the stem-abutment interface.

In some embodiments, if the angle of a currently-used measuring abutment does not fit, (for example does not match the contour of adjacent teeth, and/or interferes with dental occlusion) the abutment is removed from the stem and replaced by an abutment that defines a different angle, larger or smaller, relative to the longitudinal axis of the stem. Optionally, a plurality of abutments are tested until a best-fitting angle is identified (14).

In some embodiments, the abutment is moved over the stem, for example slid over the stem in proximal and/or distal directions, to determine a height for the fixed abutment (15). Optionally, the height comprises gingival thickness. In some embodiments, the height is determined by sliding the abutment in a proximal direction (i.e. away from the implant) to expose a stem segment that extends across the gingiva. Optionally, scale marks denoted on the stem are referred to when assessing the abutment height.

Optionally, a model of a bridge and/or a crown are temporarily placed on the measuring abutment to imitate the fixed abutment and determine fit.

In some embodiments, a fixed abutment is selected according to the abutment parameters that were determined using the assembly, such as a height and/or angle of the abutment (16). Optionally, a prefabricated abutment is selected. Alternatively, an abutment is manufactured according to the determined parameters. In some embodiments, a length of a distal base portion of the fixed abutment is selected and/or fabricated to match the measured height. In some embodiments, an inclined surface of the fixed abutment is selected to match the measured angle. In some cases, if there is a slight mismatch between the selected angle and the actual angle of the fixed abutment, when placed in the mouth, the dentist may smooth out (e.g. by polishing) the inclined surface of the fixed abutment until a desired angle is reached.

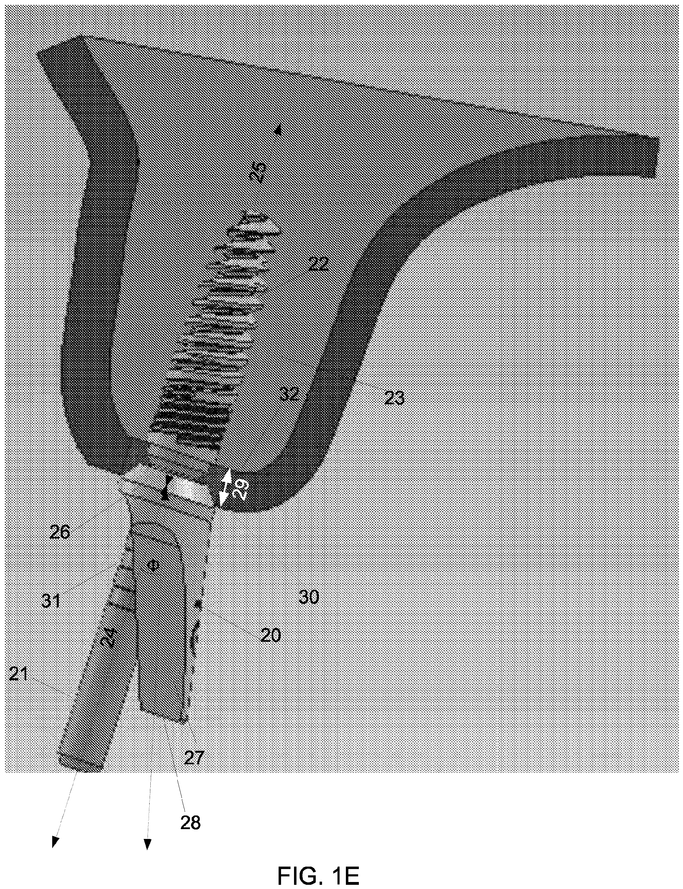

**Figure 1E** illustrates a measuring assembly comprising a measuring abutment and an abutment stem mounted over a dental implant in a jaw bone, according to some embodiments of the invention.

In some embodiments, a measuring assembly comprising an abutment 20 and a stem 21 is temporarily attached to an implant 22 implanted in a jawbone 23 of a patient.

In some embodiments, stem 21 is coupled to implant 22 such that a longitudinal axis 24 of stem 21 is aligned with a longitudinal axis 25 of the implant. Alternatively, the stem is positioned at an angle relative to the implant.

In some embodiments, abutment 20 is placed over stem 21. Optionally, abutment 20 comprises a distal annular portion 26 defining a bore that allows for threading the abutment over the stem. Optionally, an inner surface of the annular portion contacts an outer surface of the stem.

In some embodiments, abutment 20 comprises at least one surface 27 defining a plane which lies at an angle Φ relative to axis 24 of the stem. Optionally, surface 27 extends from annular portion 26 to a proximal end of the abutment 28. Optionally, angle Φ is between 0-90 degrees, for example 5, 15, 20, 35, 40, 65, 80 degrees or intermediate, larger or smaller angle relative to axis 24.

In some embodiments, abutment 20 is moved over stem 21, for example by sliding it over the stem, to select a height for the fixed abutment. Optionally, an abutment height such as height 29 is a distance between a proximal gingival margin 30 and a distal gingival margin 32, at an interface with jawbone 23. In some embodiments, height 29 ranges between 0-10 mm, such as 2 mm, 5 mm, 7 mm or intermediate, longer or shorter distances. In some embodiments, when measuring the height, abutment 20 is moved in proximal direction, exposing a stem segment extending between the proximal end of the implant and a distal end of the abutment. In some embodiments, scale marks 31 are denoted on the stem for indicating a current height of the abutment, as it is moved over the stem. In an example, scales are marked at 2 mm intervals. In the exemplary configuration shown in this figure, abutment 20 is axially positioned over the stem at an initial base position, and can be moved in the proximal direction to expose the underlying stem segment when height measurement is performed.

In some embodiments, the stem segment comprising the scale is formed with protrusions and/or indentations. Optionally, the protrusions and/or indentations define steps for stopping the abutment at the different height levels.

In some embodiments, the scale marks are denoted at equal distance intervals, for example at 2 mm intervals as noted above. Alternatively, the scale marks are denoted at non-equal intervals.

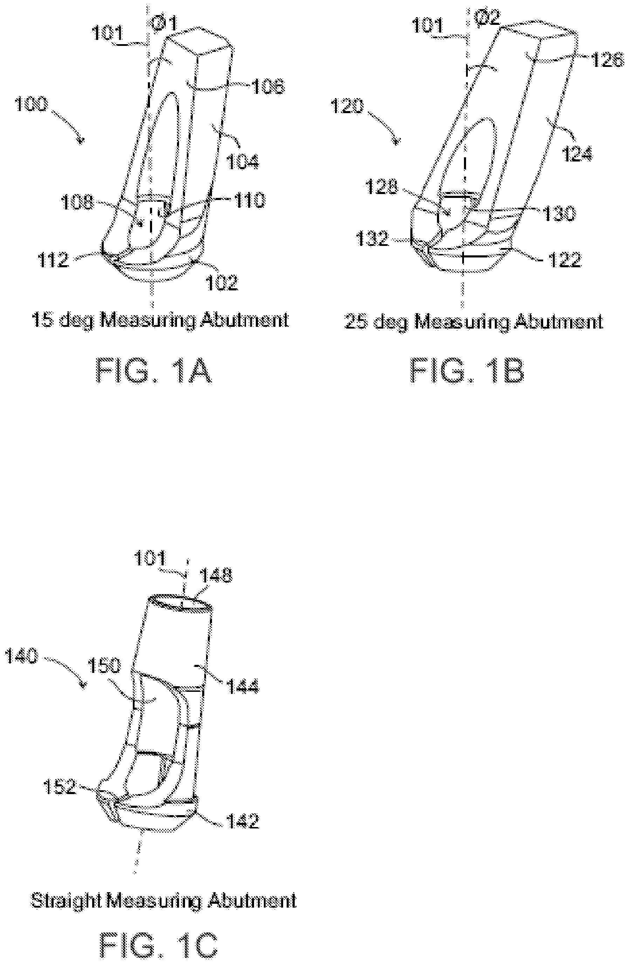

Reference is now made to FIG. 1A, which is a simplified isometric view of a first angle measuring abutment, constructed and operative in accordance with some embodiments of the present invention and to FIG. 1B, which is a simplified isometric view of a second angle measuring abutment, constructed and operative in accordance with some embodiments of the present invention, and to FIG. 1C, which is a simplified isometric view of a third angle measuring abutment, constructed and operative in accordance with some embodiments of the present invention.

A measuring abutment 100 of a first angle, for example an angle of approximately 15°, is seen in Fig. 1A. The measuring abutment 100 is arranged about a longitudinal axis 101 and includes a distal generally annular portion 102 and a proximal portion 104, which is inclined and has an inclined planar surface 106. The inclined planar surface 106 is disposed at angle Φ1, which, in this exemplary embodiment, is approximately 15° with respect to axis 101. In some embodiments, proximal portion 104 and the distal portion 102 are integrally formed. Alternatively, the proximal portion and the distal portion define separate components that can be attached together to form the abutment.

In some embodiments, a longitudinal bore 108 is formed through the distal portion 102 and through a part of the proximal portion 104 and arranged along axis 101.The bore 108 defines an inner surface 110. In some embodiments, axis 101 passes through a respective center of annular portion 102.

In some embodiments, a groove 112 is formed on the circumference of distal portion 102 and extends into bore 108. Optionally, groove 112 extends from an outer surface of the annular portion to an inner surface of the annular portion. Optionally, radially outward force applied to the inner surface of the annular portion (such as by the stem when the abutment is positioned over it) may cause widening of groove 112, allowing abutment portions configured across the groove to move slightly away from each other. A potential advantage of groove 112 may include increasing a resiliency of the abutment, facilitating threading the abutment over the stem and/or moving the abutment over the stem. Optionally, groove 112 widens only to an extent which maintains the abutment on the stem to prevent them from disengaging. In some embodiments, groove 112 facilitates sliding the abutment over protrusions formed in the shaft, for example protrusions defined at the scale markings.

In some embodiments, groove 112 extends from the internal surface in a radially outward direction, but does extend all the way through to the external surface.

A measuring abutment 120 of a second angle, preferably an angle of approximately 25°, is seen in Fig. 1B, in accordance with some embodiments of the invention. In some embodiments, the measuring abutment 120 is arranged about a longitudinal axis 101 and includes a distal generally annular portion 122 and a proximal portion 124, which is inclined and has an inclined planar surface 126. The inclined planar surface 126 is disposed at angle Φ2, which is approximately 25° with respect to axis 101. In some embodiments, the proximal portion 124 and the distal portion 122 are preferably integrally formed.

In some embodiments, a longitudinal bore 128 is formed through the distal portion 122 and part of the proximal portion 124 and arranged along axis 101.The bore 128 defines an inner surface 130.

In some embodiments, a groove 132 is formed on the circumference of distal portion 122 and extends into bore 128.

A measuring abutment 140 of a third angle, for example an angle of approximately 0°, is seen in Fig. 1C. In some embodiments, the measuring abutment 140 is arranged about a longitudinal axis 101 and includes a distal generally annular portion 142 and a proximal generally cylindrical portion 144. In some embodiments, the proximal portion 144 and the distal portion 142 are preferably integrally formed.

In some embodiments, a longitudinal bore 148 is formed entirely through the distal portion 142 and through the proximal portion 144 and arranged along axis 101.The bore 148 defines an inner cylindrical surface 150. In some embodiments, proximal portion 144 is comprises a window 145. Optionally, window 145 is defined by a cut-out portion of the cylindrical abutment wall. Optionally, window 145 provides visual access to the stem when the abutment is positioned over the stem, allowing the dentist to determine the height.

In some embodiments, a groove 152 is formed on the circumference of distal portion 142 and extends into bore 148.

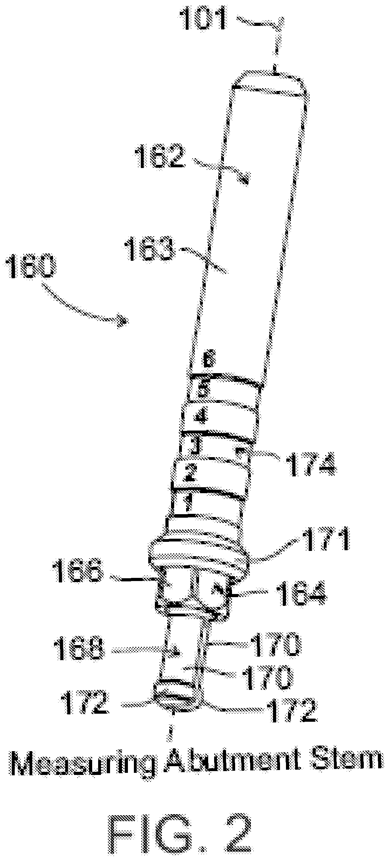

Reference is now made to FIG. 2, which is a simplified isometric view of an abutment stem, constructed and operative in accordance with some embodiments of the present invention.

In some embodiments, an abutment stem 160 is an integrally made generally cylindrical part arranged longitudinally about axis 101. Alternatively, abutment stem 160 is comprised of more than one part.

In some embodiments, the abutment stem 160 has a proximal cylindrical portion 162 having an outer surface 163, an intermediate portion 164 having, according to some embodiments, an outer polygonal surface 166, optionally a hexagonal outer surface, and a distal portion 168 composed of a plurality of relatively resilient fingers 170, optionally forming a gap therebetween. Optionally, each of the fingers 170 has a relatively widened distal portion 172.

In some embodiments, marking scales 174 are denoted on the circumference of proximal cylindrical portion 162 of abutment stem 160. In some embodiments, for example as shown herein, the scale comprises protrusions and/or indentations formed relative to the stem shaft. A potential advantage of a height scale comprising protrusions and/or indentations may include providing sensible feedback to the dentist that the abutment was moved over to another scale mark.

In some embodiments, the intervals between the markings are of an equal distance. Alternatively, the intervals are set at non-equal distances.

In some embodiments, stem 160 comprises a radially outward extending shoulder 171. Optionally, shoulder 171 acts as stopper for limiting movement of the abutment in a distal direction when the abutment is threaded over the stem. Optionally, different stems may be provided including shoulders positioned at different heights relative to the stem, redefining the "zero height" reference. Additionally or alternatively, a spacing element (for example an annular ring) may be positioned over the stem to set a different height reference level.

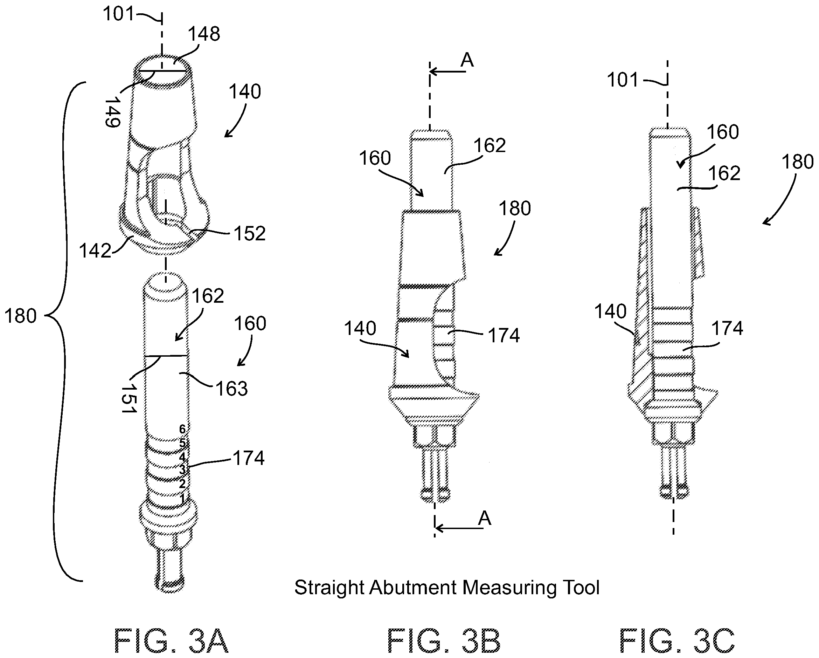

Reference is now made to Fig. 3A, which is a simplified exploded view of a measuring assembly, including the abutment stem of Fig. 2 and the measuring abutment of Fig. 1C and to Fig. 3B, which is a simplified assembled view of a measuring assembly of Fig. 3A and to Fig. 3C, which is a simplified cross-sectional view of a measuring assembly of Fig. 3B, section being taken along lines A - A in Fig. 3B, in accordance with some embodiments of the invention.

In some embodiments, as shown for example in Figs. 3A - 3C, measuring abutment 140 is assembled onto abutment stem 160 to form a first adjustable measuring assembly 180.

In some embodiments, measuring abutment 140 is slidably movable along the proximal portion 162 of abutment stem 160. In some embodiments, there is a friction fit between the inner surface 150 of measuring abutment 140 and the outer surface 163 of abutment stem 160. In some embodiments, the groove 152 on the distal portion 142 of measuring abutment 140 provides for relative resiliency of the distal portion 142 and thus allows sliding movement of the measuring abutment 140 along abutment stem 160.

In some embodiments, the proximal portion 162 of abutment stem 160 is inserted into measuring abutment 140 through bore 148. In some embodiments, an inner diameter 149 of bore 148 is sized according to an outer diameter 151 of stem 160. Optionally, a tolerance defined between the diameters is selected to maintain the abutment held to the stem, yet to provide for relative sliding of the abutment over the stem. In an example, diameter 149 of the abutment is no more than 2%, 5%, 25% or intermediate, higher or smaller percentages larger than diameter 151 of the stem.

In some embodiments, measuring abutment 140 and abutment stem 160 are arranged along a mutual longitudinal axis 101.

In some embodiments, materials of an inner surface of bore 148 of the abutment and/or materials of at least an outer surface of portion 162 of the stem are selected according to their friction coefficient, for example to increase friction forces between the stem and the implant. In an example, the outer surface of the stem comprises metal, and the inner surface of the abutment comprises rubber. In another example, the inner surface of the abutment comprises plastic.

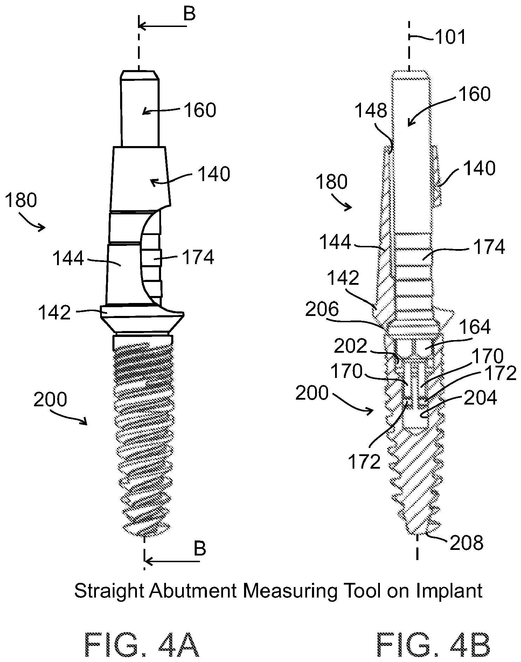

Reference is now made to Fig. 4A, which is a simplified assembled view of a measuring assembly of Fig. 3B assembled on an implant and to Fig. 4B, which is a simplified cross-sectional view of a measuring assembly assembled on an implant of Fig. 4A, section being taken along lines B - B in Fig. 4A, in accordance with some embodiments.

In some embodiments, as shown for example in Figs. 4A & 4B, adjustable measuring assembly 180 is assembled onto a dental implant 200.

In some embodiments, the intermediate hexagonal portion 164 of abutment stem 160 is inserted into a corresponding hexagonal portion 202 of the dental implant. It is noted that the abutment stem may comprise a configuration other than hexagonal (for example circular, squared, and/o other configurations) shaped to be received in a recess which comprises a matching profile, configured at a proximal portion of the implant.

In some embodiments, abutment stem 160 comprises one or more distally extending elements configured to engage the implant. In some embodiments, the implant-engaging elements are in the form of distal fingers 170. In some embodiments, the distal fingers 170 of abutment stem 160 are inserted into an internal cavity 204 of the dental implant 200. In some embodiments, there is a friction fit between the surface of the internal cavity 204 of dental implant 200 and the widened section 172 of fingers 170 of abutment stem 160. In some embodiments, distal fingers 170 are configured to spring outwardly in a radial direction. Optionally, fingers 170 push against the wall of internal cavity 204 of the dental implant, producing an interference fit between the implant and stem. Optionally, the fingers are shaped to snap-fit into respective recesses in the internal cavity of the implant. In some embodiments, a resiliency of the distal fingers is selected to provide a coupling of a certain strength.

In some embodiments, the dental implant 200 has a proximal end 206 and a distal end 208.

In some embodiments, friction forces between the surface of the internal cavity 204 of dental implant 200 and the widened section 172 of fingers 170 of abutment stem 160 are higher than friction forces between the inner surface 150 of measuring abutment 140 and the outer surface 163 of abutment stem 160, thus the measuring abutment 140 can be slidably moved along the abutment stem 160 without causing disattachment of the measuring assembly 180 from the dental implant 200. Optionally, widened section 172 of the fingers is shaped to resist pull out of the stem from the implant. In some embodiments, the fingers are shaped to resist axial rotation of the stem when attached to the implant.

In some embodiments, to remove the stem form the implant, the distally extending fingers are forced radially inwardly relative to the walls of internal cavity 204 of the implant, enabling the stem to be moved away from the implant.

In some embodiments, positioning measuring assembly 140 on an abutment stem 160 and assembly of the adjustable measuring assembly 180 on the dental implant 200 provides for identification of the required abutment angle to be 0°. In some embodiments, the slidable movement of the measuring abutment 140 along the abutment stem 160 provides for identification of the required abutment height. Optionally, the required height is identified in accordance to the marking scale 174, which is aligned with the distal portion 142 of the measuring abutment 140 once the adjustable measuring assembly 180 is assembled onto the implant 200 and assumes a certain height relative to the jaw bone, this height is measured using relative movement between the measuring abutment 140 and the abutment stem 160.

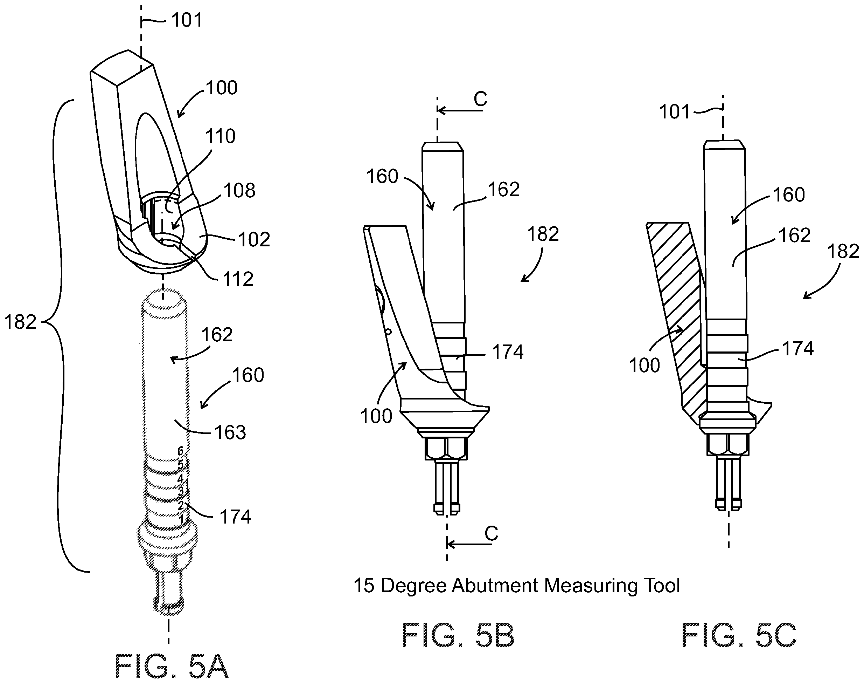

Reference is now made to Fig. 5A, which is a simplified exploded view of a measuring assembly, including the abutment stem of Fig. 2 and the measuring abutment of Fig. 1A and to Fig. 5B, which is a simplified assembled view of a measuring assembly of Fig. 5A and to Fig. 5C, which is a simplified cross-sectional view of a measuring assembly of Fig. 5B, section being taken along lines C - C in Fig. 5B.

In some embodiments, as shown for example in Figs. 5A - 5C, measuring abutment 100 is assembled onto abutment stem 160 to form a second adjustable measuring assembly 182.

In some embodiments, measuring abutment 100 is slidably movable along the proximal portion 162 of abutment stem 160. In some embodiments, there is a friction fit between the inner surface 110 of measuring abutment 100 and the outer surface 163 of abutment stem 160. In some embodiments, the groove 112 on the distal portion 102 of measuring abutment 100 provides for relative resiliency of the distal portion 102 and thus allows slidable movement of the measuring abutment 100 along abutment stem 160.

In some embodiments, the proximal portion 162 of abutment stem 160 is inserted into measuring abutment 100 through bore 108.

In some embodiments, inclined surface 106 of measuring abutment 100 is disposed at an angle of, for example, 15° with respect to the longitudinal axis 101 about which abutment stem 160 extends.

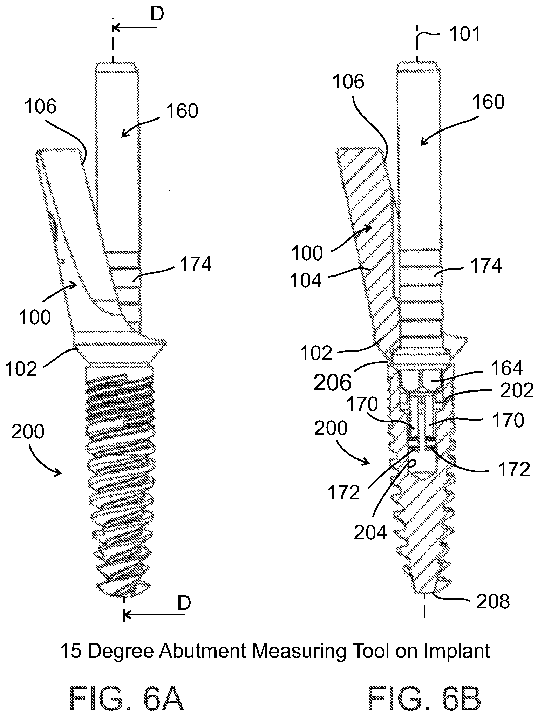

Reference is now made to Fig. 6A, which is a simplified assembled view of a measuring assembly of Fig. 5B assembled on an implant and to Fig. 6B, which is a simplified cross-sectional view of a measuring assembly assembled on an implant of Fig. 6A, section being taken along lines D - D in Fig. 6A.

In some embodiments, for example as shown in Figs. 6A & 6B, the second adjustable measuring assembly 182 is assembled onto a dental implant 200.

In some embodiments, the intermediate hexagonal portion 164 of abutment stem 160 is inserted into a corresponding hexagonal portion 202 of the dental implant. In some embodiments, the distal fingers 170 of abutment stem 160 are inserted into an internal cavity 204 of the dental implant 200. In some embodiments, there is a friction fit between the surface of the internal cavity 204 of dental implant 200 and the widened section 172 of fingers 170 of abutment stem 160.

It is noted that the dental implant 200 has a proximal end 206 and a distal end 208.

In some embodiments, friction forces between the surface of the internal cavity 204 of dental implant 200 and the widened section 172 of fingers 170 of abutment stem 160 are higher than friction forces between the inner surface 110 of measuring abutment 100 and the outer surface 163 of abutment stem 160, thus the measuring abutment 100 can be slidably moved along the abutment stem 160 without causing disattachment of the adjustable measuring assembly 182 from the dental implant 200.

In some embodiments, positioning measuring abutment 100 on an abutment stem 160 and assembly of the adjustable measuring assembly 182 on the dental implant 200 provides for identification of the required abutment angle to be 15°. In some embodiments, the slidable movement of the measuring abutment 100 along the abutment stem 160 provides for identification of the required abutment height. Optionally, the required height is identified in accordance to the marking scale 174, which is aligned with the distal portion 102 of the measuring abutment 100 once the measuring assembly 182 is assembled onto the implant 200 and assumes a certain height relative to the jaw bone. Optionally, this height is measured using relative movement between the measuring abutment 100 and the abutment stem 160.

In some embodiments, inclined surface 106 can be alternatively disposed at any other angle with respect to longitudinal axis 101.

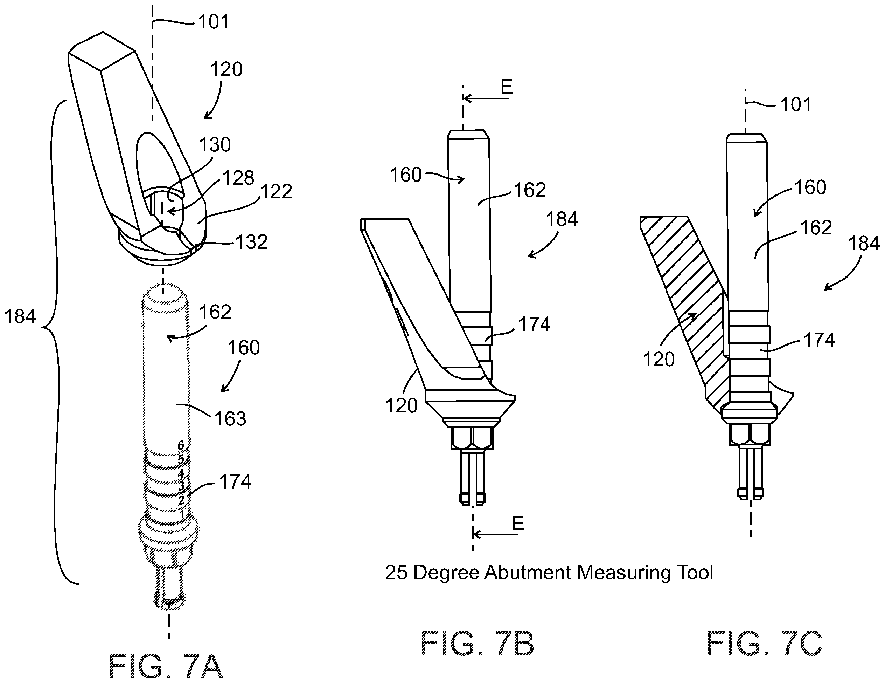

Reference is now made to Fig. 7A, which is a simplified exploded view of a measuring assembly, including the abutment stem of Fig. 2 and the measuring abutment of Fig. 1B and to Fig. 7B, which is a simplified assembled view of a measuring assembly of Fig. 7A and to Fig. 7C, which is a simplified cross-sectional view of a measuring assembly of Fig. 7B, section being taken along lines E - E in Fig. 7B.

In some embodiments, as shown for example in Figs. 7A - 7C, measuring abutment 120 is assembled onto abutment stem 160 to form a third adjustable measuring assembly 184.

In some embodiments, measuring abutment 120 is slidably movable along the proximal portion 162 of abutment stem 160. In some embodiments, there is a friction fit between the inner surface 130 of measuring abutment 120 and the outer surface 163 of abutment stem 160. In some embodiments, the groove 132 on the distal portion 122 of measuring abutment 120 provides for relative resiliency of the distal portion 122 and thus allows slidable movement of the measuring abutment 120 along abutment stem 160.

In some embodiments, the proximal portion 162 of abutment stem 160 is inserted into measuring abutment 120 through bore 128.

In some embodiments, inclined surface 126 of measuring abutment 120 is disposed at an angle of preferably 25° with respect to the longitudinal axis 101 about which abutment stem 160 extends.

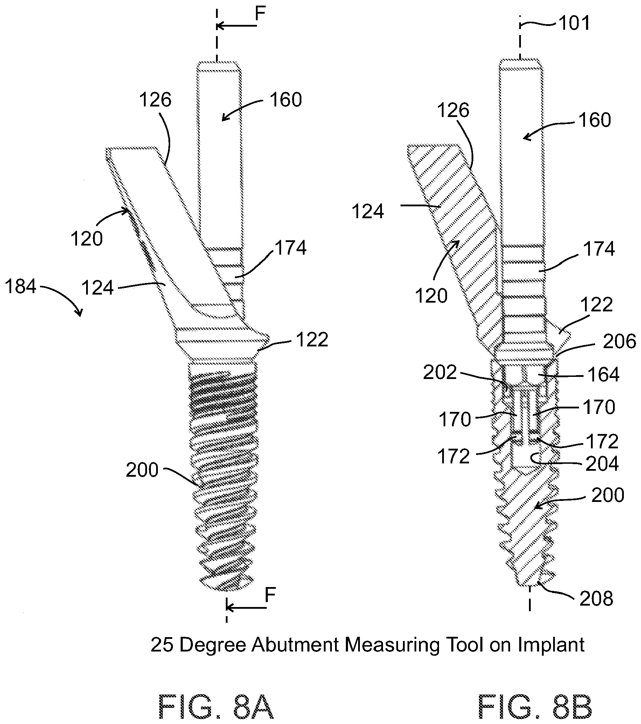

Reference is now made to Fig. 8A, which is a simplified assembled view of a measuring assembly of Fig. 7B assembled on an implant and to Fig. 8B, which is a simplified cross-sectional view of a measuring assembly assembled on an implant of Fig. 8A, section being taken along lines F - F in Fig. 8A.

In some embodiments, as shown for example in figs. 8A & 8B, third adjustable measuring assembly 184 is assembled onto a dental implant 200.

In some embodiments, the intermediate hexagonal portion 164 of abutment stem 160 is inserted into a corresponding hexagonal portion 202 of the dental implant. In some embodiments, the distal fingers 170 of abutment stem 160 are inserted into an internal cavity 204 of the dental implant 200. In some embodiments, there is a friction fit between the surface of the internal cavity 204 of dental implant 200 and the widened section 172 of fingers 170 of abutment stem 160.

It is noted that the dental implant 200 has a proximal end 206 and a distal end 208.

In some embodiments, friction forces between the surface of the internal cavity 204 of dental implant 200 and the widened section 172 of fingers 170 of abutment stem 160 are higher than friction forces between the inner surface 130 of measuring abutment 120 and the outer surface 163 of abutment stem 160, thus the measuring abutment 120 can be slidably moved along the abutment stem 160 without causing disattachment of the measuring assembly 184 from the dental implant 200.

In some embodiments, positioning measuring abutment 120 on an abutment stem 160 and assembly of the adjustable measuring assembly 184 on the dental implant 200 provides for identification of the required abutment angle to be 25°. The slidable movement of the measuring abutment 120 along the abutment stem 160 provides for identification of the required abutment height. In some embodiments, the required height is identified in accordance to the marking scale 174, which is aligned with the distal portion 122 of the measuring abutment 120 once the adjustable measuring assembly 184 is assembled onto the implant 200 and assumes certain height relative to the jaw bone, this height is measured using relative movement between the measuring abutment 120 and the abutment stem 160.

In some embodiments, the inclined surface 126 can be alternatively disposed at any other angle with respect to longitudinal axis 101.

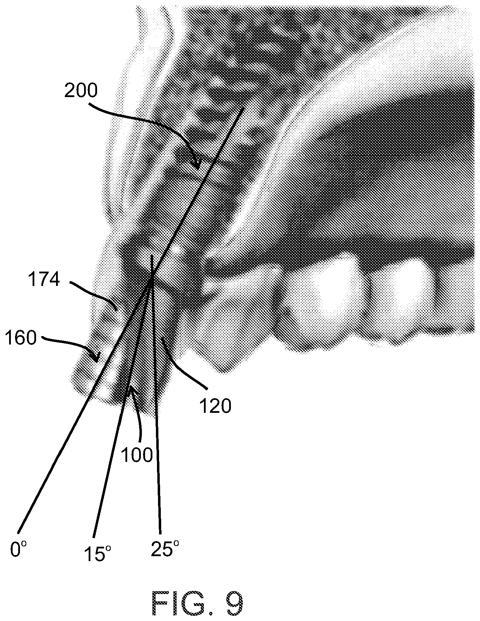

Reference is now made to Fig. 9, which is a simplified illustration of a jaw bone with an implant and a measuring abutment assembled thereon, according to some embodiments.

In some embodiments, as shown for example in Fig. 9, adjustable measuring assembly such as 180 or 182 or 184 is assembled on to dental implant 200 in order to identify the dimensions of a fixed abutment to be placed onto the dental implant 200 in order to fixate a dental prosthesis on the gingiva of a patient.

In some embodiments, a single measuring assembly provides for measuring both the required angle and height of fixed abutment relative to the jaw bone.

In some embodiments, each of measuring abutment 100, 120 or 140 maybe assembled onto measuring stem 160 in order to measure both angle and height of the required fixed abutment. Alternatively all three measuring abutments, or any other number of measuring abutments, can be formed as a single integral part by creating several inclined surfaces on the measuring abutment, while each inclined surface is disposed at a different angle with respect to longitudinal axis 101 of the abutment stem 160. In this alternative embodiment where several inclined surfaces are formed on a single measuring abutment, a single measuring assembly can replace an entire planning kit including a plurality of measuring abutments, as this single measuring assembly enables measuring the required height and several angles at once.

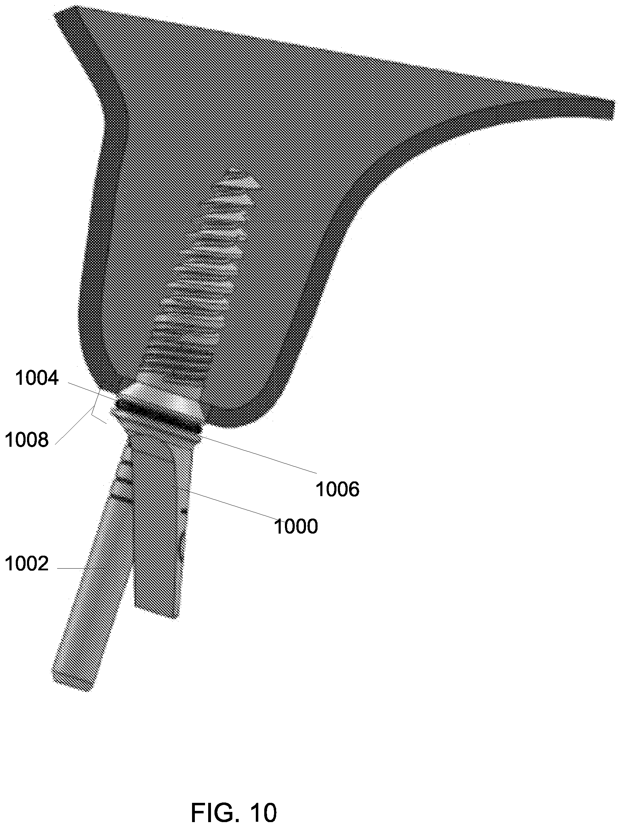

Figure 10 is an illustration of a measuring assembly comprising a measuring abutment and an abutment stem mounted onto a dental implant in a jaw bone, the assembly comprising an elastic element positioned at an interface between the stem and the abutment, according to some embodiments of the invention.

In some embodiments, a coupling between the abutment 1000 and stem 1002 comprises an elastic element 1004. Optionally, elastic element 1004 is positioned to elastically compress at least a portion of the abutment to tighten the fit between the abutment and the stem. In some embodiments, abutment 1000 comprises a groove 1006, configured for example on a distal annular portion 1008, for receiving the elastic element. In some embodiments, when elastic element is seated in the groove, it applies a radial pressure for maintaining a tight fit between the abutment and stem. Optionally, the elastic element is elastic enough to provide for sliding the abutment over the stem. In some embodiments, at least some portions of the groove are formed all the way through the abutment material, exposing the stem to allow direct contact between the elastic element and the stem. A potential advantage of placing an elastic element over the abutment at the abutment-stem interface may include compensating for tolerance differences, potentially allowing for a less restrictive abutment-stem tolerance yet still maintaining the abutment held to the stem and movable on the stem.

In some embodiments, the elastic element 1004 is a band. Optionally, the band is formed of rubber. Optionally, the band is elliptical and not annular so as to be seated in a non-annular groove 1006 of the abutment, being exposed to the stem along some open portions of the groove and overlying abutment portions along other portions of the groove. In an example, open portions of the groove are configured on opposing circumferential segments.

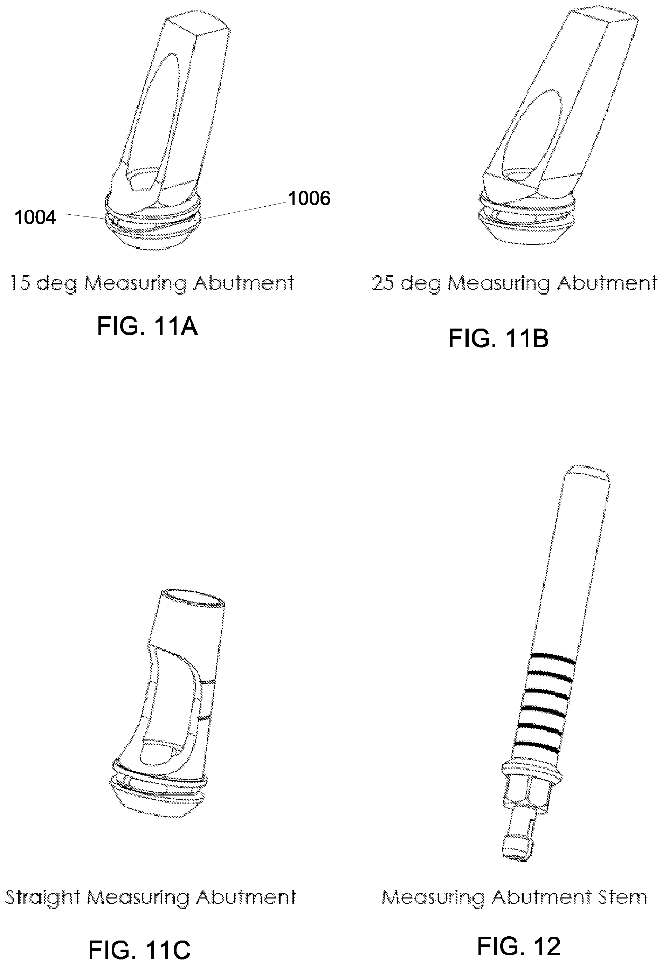

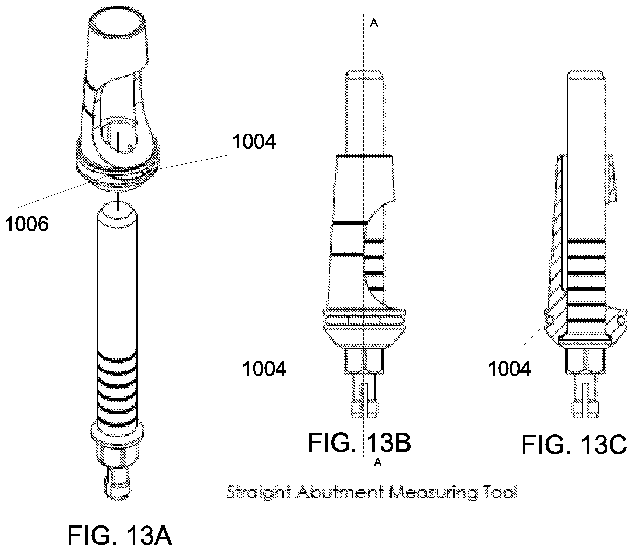

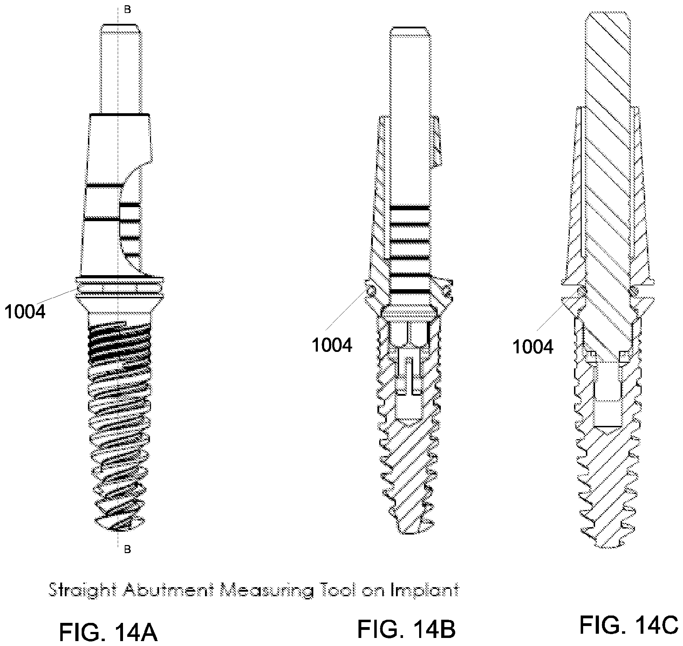

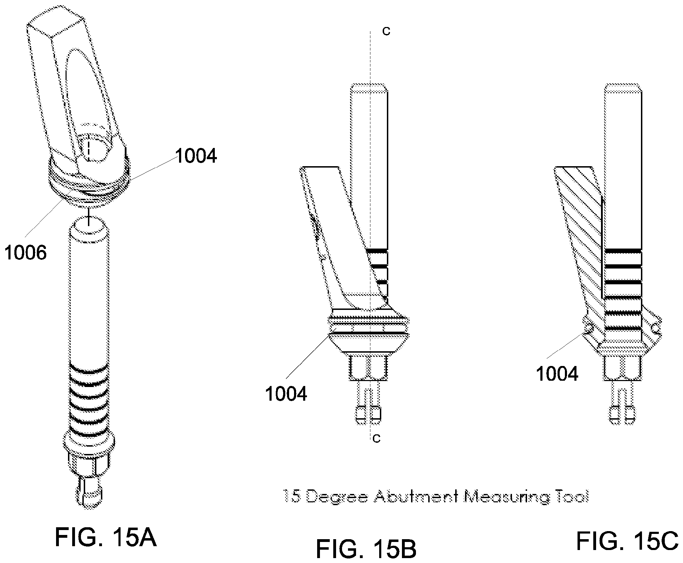

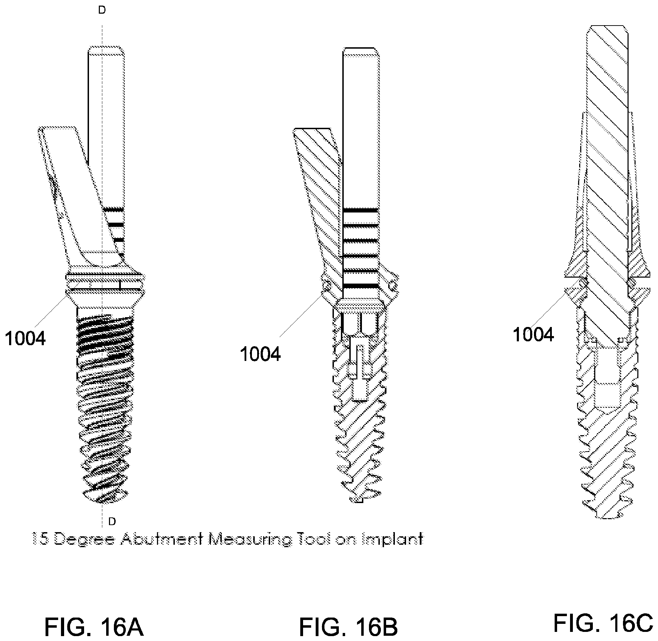

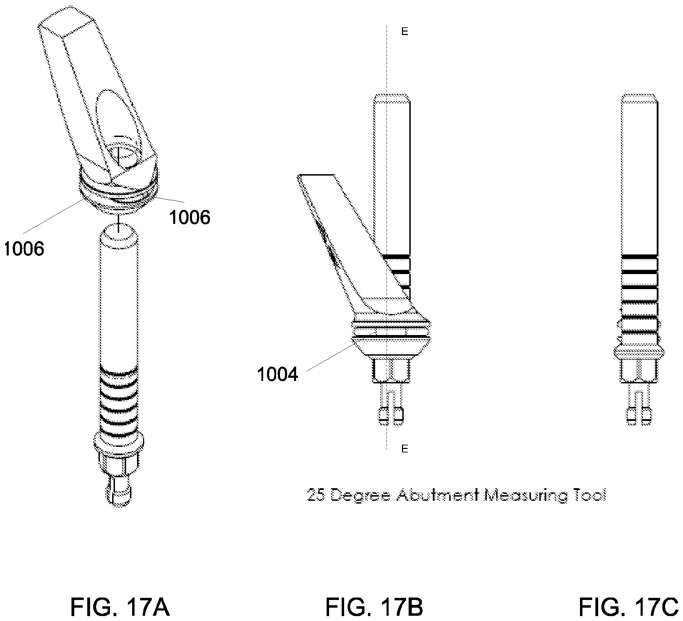

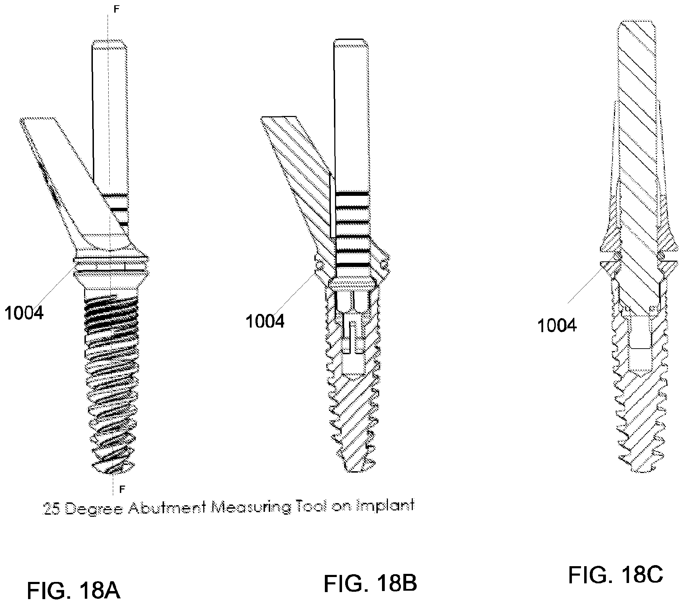

The description of the following figures 11-18, according to some embodiments of the invention, corresponds to the above description of figures 1-8 (i.e. figure 11A corresponds to figure 1A, figure 12 corresponds to figure 2, etc), apart from that the distal annular portion 1008 of the abutment comprises a groove 1006 in which an elastic element 1004 is seated. Figures 14C, 16C and 18C show a cross section view transverse to the one shown in figures 14B, 16B and 8B respectively, showing the elastic element 1004 directly contacting the stem along some portions of the elastic element, through one or more openings defined in groove 1006 of the abutment, in accordance with some embodiments of the invention.

It will be appreciated by persons skilled in the art that the present invention is not limited by what has been particularly shown and described hereinabove. Rather the scope of the present invention is defined by the appended claims.

The terms "comprises", "comprising", "includes", "including", "having" and their conjugates mean "including but not limited to".

The term "consisting of' means "including and limited to".

The term "consisting essentially of" means that the composition, method or structure may include additional ingredients, steps and/or parts, but only if the additional ingredients, steps and/or parts do not materially alter the basic and novel characteristics of the claimed composition, method or structure.

As used herein, the singular form "a", "an" and "the" include plural references unless the context clearly dictates otherwise. For example, the term "a compound" or "at least one compound" may include a plurality of compounds, including mixtures thereof.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

As used herein the term "method" refers to manners, means, techniques and procedures for accomplishing a given task including, but not limited to, those manners, means, techniques and procedures either known to, or readily developed from known manners, means, techniques and procedures by practitioners of the chemical, pharmacological, biological, biochemical and medical arts.

As used herein, the term "treating" includes abrogating, substantially inhibiting, slowing or reversing the progression of a condition, substantially ameliorating clinical or aesthetical symptoms of a condition or substantially preventing the appearance of clinical or aesthetical symptoms of a condition.

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable subcombination or as suitable in any other described embodiment of the invention. Certain features described in the context of various embodiments are not to be considered essential features of those embodiments, unless the embodiment is inoperative without those elements.

## Claims

1. A dental measuring assembly kit comprising
an elongated stem (160) defining a longitudinal axis (101) between a proximal end and a distal end of said stem;
a plurality of measuring abutments (100, 120, 140), each measuring abutment configured to be received over said proximal end of said stem and to axially slide over said stem; wherein a distal segment of said stem comprises scale markings (174) denoting a height of a distal end of said measuring abutment relative to said stem; and
wherein each measuring abutment (100) comprises an inclined surface (106) disposed at a different angle relative to said longitudinal axis of the stem;
**characterized in that** each said measuring abutment is configured to snugly fit said stem, with a wobbling of the abutment relative to the stem of less than 2 degrees.

2. The dental measuring assembly kit according to claim 1, wherein said kit comprises at least three abutments: a first abutment (140) defining an angle of 0 degrees relative to said longitudinal axis of said stem; a second abutment (100) defining an angle of 15 degrees relative to said longitudinal axis of said stem; a third abutment (120) defining an angle of 25 degrees relative to said longitudinal axis of said stem.

3. A method of employing the dental measuring assembly kit according to claim 1 to determine at least one of a height and angle of a dental abutment, comprising:
positioning an elongated stem over a dental implant implanted in a jawbone of a patient(12);
threading a measuring abutment over said stem (13);
sliding said abutment axially on said stem to determine a height for a fixed abutment, said height determined according to scale marks denoted on said stem (15); and
assessing whether an angle defined by said measuring abutment relative to said stem at said current layout is configured to fulfill functional requirements of a fixed abutment selected according to said current angle.

4. The method according to claim 3, further comprising, following said assessing, replacing said measuring abutment with another measuring abutment defining a different angle relative to said longitudinal axis of said stem and repeating said assessing.

5. The method according to any one of claims 3-4, wherein said positioning said stem over said dental implant comprises press-fitting said stem into said implant.

6. The method according to any one of claims 3-5, wherein said positioning said measuring abutment over said stem comprises threading an annular portion of said abutment over a proximal end of said stem.

7. The dental measuring assembly kit according to any one of claims 1-2, wherein a proximally extending portion of said measuring abutment comprises at least one inclined surface (106), said surface disposed at an angle relative to said longitudinal axis of said stem when said abutment is positioned over said stem.

8. The dental measuring assembly kit according to any one of claims 1-2 and 7, wherein said abutment is held to said stem by a friction-fit coupling and said friction is between two materials, wherein at least one of an outer surface of said stem and an inner surface of said abutment at said bore comprises a material having a high friction coefficient.

9. The dental measuring assembly kit according to claim 8, wherein said outer surface of said stem comprises titanium and said inner surface of said abutment comprises rubber.

10. The dental measuring assembly kit according to any one of claims 1-2 and 7-9, wherein said abutment comprises a distal annular portion (102) defining a longitudinal bore (108) in which said stem is received said distal annular portion of said abutment comprises a groove (112).

11. The dental measuring assembly kit according to claim 10, wherein an elastic element (1004) is seated within said groove (112) to tighten a fit of said abutment onto said stem.

12. The dental measuring assembly kit according to claim 10, wherein said distal annular portion (102) of said abutment comprises a groove (112) extending from an outer surface of said portion to an inner surface of said portion.

13. The dental measuring assembly kit according to any one of claims 1-2 and 7-12, wherein a portion of said stem configured distally to said segment comprising said scale is configured to engage a dental implant.

14. The dental measuring assembly kit according to any one of claims 1-2 and 7-13, wherein said stem comprises distal extensions (170) configured to press-fit into a cavity configured at a proximal portion of said implant, said distal extensions configured to spring radially outwardly to resist pull-out of said stem from said implant.

15. The dental measuring assembly kit according to claim 14, wherein said distal extensions (170) are shaped to resist rotation of said stem around an axis of said implant when said stem is attached to said implant.

16. The dental measuring assembly kit according to any one of claims 1-2 and 7-15, wherein the height of said measuring abutment distal end relative to said stem is adjustable between a proximal gingival margin and a distal gingival margin.

17. The dental measuring assembly kit according to any one of claims 1-2 and 7-16, wherein the height of said measuring abutment distal end relative to said stem is adjustable by intervals.

18. The dental measuring assembly kit according to any one of claims 1-2 and 7-16, wherein an identified height is measured at a point at which a scale marking is aligned with a distal portion of said measuring abutment.

## Patentansprüche

1. Ein Bausatz für eine dentale Messanordnung, aufweisend
einen länglichen Schaft (160), der eine Längsachse (101) zwischen einem proximalen Ende und einem distalen Ende des Schaftes definiert;
mehrere Messanschläge (100, 120, 140), wobei jeder Messanschlag so konfiguriert ist, dass es über dem proximalen Ende des Schaftes aufgenommen wird und axial über den Schaft gleitet; wobei ein distales Segment des Schaftes Skalenmarkierungen (174) aufweist, die eine Höhe eines distalen Endes des Messanschlages relativ zu dem Schaft bezeichnen; und
wobei jeder Messanschlag (100) eine geneigte Fläche (106) aufweist, die in einem unterschiedlichen Winkel relativ zu der Längsachse des Schaftes angeordnet ist;
**dadurch gekennzeichnet, dass** jeder der Messanschlag so konfiguriert ist, dass es eng am Schaft anliegt, wobei das Taumeln des Anschlags relativ zum Schaft weniger als 2 Grad beträgt.

2. Bausatz für eine dentale Messanordnung nach Anspruch 1, wobei der Bausatz mindestens drei Anschläge umfasst: einen ersten Anschlag (140), der einen Winkel von 0 Grad relativ zu der Längsachse des Schaftes definiert; einen zweiten Anschlag (100), der einen Winkel von 15 Grad relativ zu der Längsachse des Schaftes definiert; einen dritten Anschlag (120), der einen Winkel von 25 Grad relativ zu der Längsachse des Schaftes definiert.

3. Ein Verfahren zur Verwendung des Bausatzes für eine dentale Messanordnung nach Anspruch 1 zur Bestimmung der Höhe und/oder des Winkels eines Dentalanschlags, umfassend:
Positionierung eines länglichen Schaftes über einem Zahnimplantat, das in den Kieferknochen eines Patienten (12) implantiert wurde;
Schrauben eines Messanschlags über den Schaft (13);
axiales Verschieben des Anschlags auf dem Schaft, um eine Höhe für ein festes Widerlager zu bestimmen, wobei die Höhe gemäß den auf dem Schaft (15) angegebenen Skalenmarkierungen bestimmt wird; und
Beurteilung, ob ein Winkel, der durch den Messanschlag relativ zum Schaft bei der aktuellen Anordnung definiert ist, so konfiguriert ist, dass er die funktionellen Anforderungen eines festen Anschlags erfüllt, das entsprechend dem aktuellen Winkel ausgewählt wurde.

4. Verfahren nach Anspruch 3, ferner umfassend, nach der Bewertung das Ersetzen des Messanschlags durch einen anderen Messanschlag, der einen anderen Winkel relativ zu der Längsachse des Schaftes definiert, und das Wiederholen der Bewertung.

5. Verfahren nach einem der Ansprüche 3-4, wobei die Positionierung des Schaftes über dem Zahnimplantat eine Presspassung des Schaftes in das Implantat umfasst.

6. Verfahren nach einem der Ansprüche 3-5, wobei das Positionieren des Messanschlags über dem Schaft das Gewindeschneiden eines ringförmigen Abschnitts des Anschlags über ein proximales Ende des Schafts umfaßt.

7. Bausatz für eine dentale Messanordnung nach einem der Ansprüche 1-2, wobei ein sich proximal erstreckender Abschnitt des Messanschlags mindestens eine geneigte Fläche (106) aufweist, wobei die Fläche in einem Winkel relativ zur Längsachse des Schaftes angeordnet ist, wenn der Anschlag über dem Schaft positioniert ist.

8. Bausatz für eine dentale Messanordnung nach einem der Ansprüche 1-2 und 7, wobei der Anschlag an dem Schaft durch eine Reibungspassungskupplung gehalten wird und die Reibung zwischen zwei Materialien besteht, wobei mindestens eine der Außenfläche des Schaftes und eine der Innenfläche des Anschlags an der Bohrung ein Material mit einem hohen Reibungskoeffizienten aufweist.

9. Bausatz für eine dentale Messanordnung nach Anspruch 8, wobei die Außenfläche des Schaftes Titan und die Innenfläche des Anschlags Gummi umfasst.

10. Bausatz für eine dentale Messanordnung nach einem der Ansprüche 1-2 und 7-9, wobei der Anschlag einen distalen ringförmigen Abschnitt (102) aufweist, der eine Längsbohrung (108) definiert, in der der Schaft aufgenommen wird, wobei der distale ringförmige Abschnitt des Anschlags eine Nut (112) aufweist.

11. Bausatz für eine dentale Messanordnung nach Anspruch 10, bei dem ein elastisches Element (1004) in der Nut (112) sitzt, um eine Passung des Anschlags auf dem Schaft festzuziehen.

12. Bausatz für eine dentale Messanordnung nach Anspruch 10, wobei der distale ringförmige Abschnitt (102) des Anschlags eine Nut (112) aufweist, die sich von einer Außenfläche des Abschnitts zu einer Innenfläche des Abschnitts erstreckt.

13. Bausatz für eine dentale Messanordnung nach einem der Ansprüche 1-2 und 7-12, wobei ein Teil des Schaftes, der distal zu dem die Skala umfassenden Segment konfiguriert ist, so konfiguriert ist, dass er in ein Zahnimplantat eingreift.

14. Bausatz für eine dentale Messanordnung nach einem der Ansprüche 1-2 und 7-13, wobei der Schaft distale Verlängerungen (170) umfasst, die so konfiguriert sind, dass sie in einen an einem proximalen Abschnitt des Implantats konfigurierten Hohlraum passen, wobei die distalen Verlängerungen so konfiguriert sind, dass sie radial nach außen federn, um ein Herausziehen des Schafts aus dem Implantat zu verhindern.

15. Bausatz für eine dentale Messanordnung nach Anspruch 14, wobei die distalen Verlängerungen (170) so geformt sind, dass sie einer Drehung des Schafts um eine Achse des Implantats widerstehen, wenn der Schaft an dem Implantat befestigt ist.

16. Bausatz für eine dentale Messanordnung nach einem der Ansprüche 1-2 und 7-15, wobei die Höhe des distalen Endes des Messanschlags relativ zum Schaft zwischen einem proximalen Gingivarand und einem distalen Gingivarand einstellbar ist.

17. Bausatz für eine dentale Messanordnung nach einem der Ansprüche 1-2 und 7-16, wobei die Höhe des distalen Endes des Messanschlags relativ zum Schaft in Intervallen einstellbar ist.

18. Bausatz für eine dentale Messanordnung nach einem der Ansprüche 1-2 und 7-16, wobei eine identifizierte Höhe an einem Punkt gemessen wird, an dem eine Skalenmarkierung mit einem distalen Abschnitt des Messanschlags ausgerichtet ist.

## Revendications

1. Un kit d'assemblage de mesure dentaire, comprenant
une tige allongée (160) définissant un axe longitudinal (101) entre une extrémité proximale et une extrémité distale de ladite tige ;
une pluralité de butées de mesure (100, 120, 140), chaque butée de mesure étant configurée pour être reçue sur ladite extrémité proximale de ladite tige et pour coulisser axialement sur ladite tige ; dans laquelle un segment distal de ladite tige comprend des marques d'échelle (174) indiquant une hauteur d'une extrémité distale de ladite butée de mesure par rapport à ladite tige ; et
dans lequel chaque butée de mesure (100) comprend une surface inclinée (106) disposée selon un angle différent par rapport audit axe longitudinal de la tige ;
**caractérisé en ce que** chacun desdits butées de mesure est configuré pour s'adapter parfaitement à ladite tige, avec une oscillation de la butée par rapport à la tige de moins de 2 degrés.

2. Kit d'assemblage de mesure dentaire selon la revendication 1, dans lequel ledit kit comprend au moins trois butées : une première butée (140) définissant un angle de 0 degré par rapport audit axe longitudinal de ladite tige ; une deuxième butée (100) définissant un angle de 15 degrés par rapport audit axe longitudinal de ladite tige ; une troisième butée (120) définissant un angle de 25 degrés par rapport audit axe longitudinal de ladite tige.

3. Procédé d'utilisation du kit d'assemblage de mesure dentaire selon la revendication 1 pour déterminer au moins l'un d'une hauteur et d'un angle d'une butée dentaire, comprenant
positionner une tige allongée sur un implant dentaire implanté dans l'os de la mâchoire d'un patient (12) ;
enfiler une butée de mesure sur ladite tige (13) ;
faire coulisser axialement ladite butée sur ladite tige pour déterminer une hauteur pour une butée fixe, ladite hauteur étant déterminée selon des marques d'échelle indiqués sur ladite tige (15) ; et
évaluer si un angle défini par ladite butée de mesure par rapport à ladite tige au niveau de ladite disposition actuelle est configuré pour répondre aux exigences fonctionnelles d'une butée fixe sélectionnée en fonction dudit angle actuel.

4. Procédé selon la revendication 3, comprenant en outre, après ladite évaluation, le remplacement de ladite butée de mesure par une autre butée de mesure définissant un angle différent par rapport audit axe longitudinal de ladite tige et la répétition de ladite évaluation.

5. Procédé selon l'une quelconque des revendications 3-4, dans laquelle ledit positionnement de ladite tige sur ledit implant dentaire comprend l'ajustement par pression de ladite tige dans ledit implant.

6. Procédé selon l'une quelconque des revendications 3 à 5, dans lequel ledit positionnement de ladite butée de mesure sur ladite tige comprend l'enfilage d'une partie annulaire de ladite butée sur une extrémité proximale de ladite tige.

7. Kit d'assemblage de mesure dentaire selon l'une quelconque des revendications 1-2, dans lequel une partie s'étendant de manière proximale de ladite butée de mesure comprend au moins une surface inclinée (106), ladite surface étant disposée selon un angle par rapport audit axe longitudinal de ladite tige lorsque ladite butée est positionnée sur ladite tige.

8. Kit d'assemblage de mesure dentaire selon l'une quelconque des revendications 1-2 et 7, dans lequel ladite butée est maintenue sur ladite tige par un accouplement à friction et ladite friction est entre deux matériaux, dans lequel au moins l'une d'une surface extérieure de ladite tige et d'une surface intérieure de ladite butée au niveau dudit alésage comprend un matériau ayant un coefficient de friction élevé.

9. Kit d'assemblage de mesure dentaire selon la revendication 8, dans lequel ladite surface extérieure de ladite tige comprend du titane et ladite surface intérieure dudit butée comprend du caoutchouc.

10. Kit d'assemblage de mesure dentaire selon l'une quelconque des revendications 1-2 et 7-9, dans lequel ladite butée comprend une partie annulaire distale (102) définissant un alésage longitudinal (108) dans lequel ladite tige est reçue ; ladite partie annulaire distale de ladite butée comprend une rainure (112).

11. Kit d'assemblage de mesure dentaire selon la revendication 10, dans lequel un élément élastique (1004) est logé dans ladite rainure (112) pour serrer un ajustement de ladite butée sur ladite tige.

12. Kit d'assemblage de mesure dentaire selon la revendication 10, dans lequel ladite partie annulaire distale (102) dudit butée comprend une rainure (112) s'étendant d'une surface extérieure de ladite partie à une surface intérieure de ladite partie.

13. Kit d'assemblage de mesure dentaire selon l'une quelconque des revendications 1-2 et 7-12, dans lequel une partie de ladite tige configurée de manière distale par rapport audit segment comprenant ladite échelle est configurée pour s'engager dans un implant dentaire.

14. Kit d'assemblage de mesure dentaire selon l'une quelconque des revendications 1-2 et 7-13, dans lequel ladite tige comprend des extensions distales (170) configurées pour s'ajuster par pression dans une cavité configurée au niveau d'une partie proximale dudit implant, lesdites extensions distales étant configurées pour faire ressort radialement vers l'extérieur afin de résister à l'extraction de ladite tige dudit implant.

15. Kit d'assemblage de mesure dentaire selon la revendication 14, dans lequel lesdites extensions distales (170) sont conformées pour résister à la rotation de ladite tige autour d'un axe dudit implant lorsque ladite tige est fixée audit implant.

16. Kit d'assemblage de mesure dentaire selon l'une quelconque des revendications 1-2 et 7-15, dans lequel la hauteur de ladite extrémité distale de la butée de mesure par rapport à ladite tige est réglable entre un bord gingival proximal et un bord gingival distal.

17. Kit d'assemblage de mesure dentaire selon l'une quelconque des revendications 1-2 et 7-16, dans lequel la hauteur de ladite extrémité distale de la butée de mesure par rapport à ladite tige est réglable par intervalles.

18. Kit d'assemblage de mesure dentaire selon l'une quelconque des revendications 1-2 et 7-16, dans lequel une hauteur identifiée est mesurée en un point où une marques d'échelle est aligné avec une partie distale dudit butée de mesure.
